# EUROPÄISCHE PATENTANMELDUNG

(11) **EP 3 875 346 A1**
(43) Veröffentlichungstag der Anmeldung: **08.09.2021**
(21) Anmeldenummer: 21160774.2
(22) Anmeldetag: 04.03.2021
(51) Int. Cl.: B62B 9/12, B62B 9/18

(54) **ACHSANORDNUNG FÜR EINEN KINDERWAGEN**

(30) Priorität: 05.03.2020 EP 20000096; 05.06.2020 DE 102020115016
(71) Anmelder: Emmaljunga Barnvagnsfabrik AB, 28268 Vittsjö (SE)
(72) Erfinder: Edvardsson, Joakim, 28143 Hässleholm (SE); Wedin, Erik, 28267 Vittsjö (SE); Persson, Christian, 28268 Vittsjö (SE)
(74) Vertreter: Müller Schupfner & Partner Patent- und Rechtsanwaltspartnerschaft mbB

(57) **Zusammenfassung**

Achsanordnung (1) für einen Kinderwagen, umfassend eine Achse (10), ein Fahrgestell (20) und ein Zwischenelement (30), wobei die Achse (10) sich in eine Längsrichtung (L) erstreckt, wobei das Zwischenelement (30) an der Achse (10) angeordnet und/oder festgelegt ist, insbesondere reversibel, wobei das Fahrgestell (20) sich mittelbar und/oder unmittelbar derart am Zwischenelement (30) abstützt, dass ein Moment um die Längsrichtung (L) und/oder eine Kraft quer zu der Längsrichtung (L), insbesondere in eine Querrichtung (Q), zwischen dem Zwischenelement (30) und dem Fahrgestell (20) übertragbar ist, wobei das Zwischenelement (30) in Richtung der Längsrichtung (L) verschieblich zu dem Fahrgestell (20) ist.

## Beschreibung

Die Erfindung betrifft eine Achsanordnung für einen Kinderwagen.

Achsanordnungen für Kinderwagen sind aus dem Stand der Technik bekannt und dienen dazu, einen Rahmen gegenüber einer Achse abzustützen.

Problematisch bei den aus dem Stand der Technik bekannten Achsanordnungen ist dabei, dass die Bestandteile der Achsanordnung eine besonders hohe Fertigungsgenauigkeit aufweisen müssen, sodass diese besonders teuer sind.

Es ist daher Aufgabe der vorliegenden Erfindung eine Achsanordnung bereitzustellen, die einen geringen Fertigungsaufwand erfordert. Diese Aufgabe wird mit einer Achsanordnung gemäß dem Anspruch 1 und durch einen Kinderwagen gemäß dem Anspruch 15 gelöst.

Erfindungsgemäß umfasst eine Achsanordnung für einen Kinderwagen, eine Achse, ein Fahrgestell und ein Zwischenelement, wobei die Achse sich in eine Längsrichtung erstreckt, wobei das Zwischenelement an der Achse angeordnet und/oder festgelegt ist, insbesondere reversibel, wobei das Fahrgestell sich mittelbar und/oder unmittelbar derart am Zwischenelement abstützt, dass ein Moment um die Längsrichtung und/oder eine Kraft quer zu der Längsrichtung, insbesondere in eine Querrichtung, zwischen dem Zwischenelement und dem Fahrgestell übertragbar ist, wobei das Zwischenelement in Richtung der Längsrichtung verschieblich zu dem Fahrgestell ist. Die Achsanordnung ist dabei insbesondere derjenige Teil des Kinderwagens, welcher dazu dient das Gewicht des Kinderwagens gegenüber den Rädern abzustützen. Die erfindungsgemäße Achsanordnung kann in einem handgeschobenen oder einem Kinderwagen mit elektrischem Antrieb verwendet werden. In anderen Worten kann die Achsanordnung auch eine elektrische Achsanordnung mit einem oder einer Vielzahl von Elektromotoren und/oder Sensoren sein. Die hier vorgestellte Achsanordnung kann dabei vorteilhafterweise eine Achsanordnung einer Hinterachse eines Kinderwagens sein. Die Achse der Achsanordnung dient dabei dazu, Kräfte auf Räder des Kinderwagens von dem Rahmen, dem Gestell oder dem Fahrgestell des Kinderwagens zu übertragen. Die Achse kann dabei beispielsweise aus Kunststoff oder Metall sein. Die Achse erstreckt sich dabei in eine Längsrichtung. Diese Längsrichtung ist daher insbesondere diejenige Richtung, in welche sich die Länge der Achse bemisst. Die Achse kann zumindest teilweise rotationssymmetrisch um die Längsrichtung ausgebildet sein, um eine besonders kostengünstige und leicht herzustellende Achse zu erreichen. Das Fahrgestell der erfindungsgemäßen Achsanordnung kann ein Teil des Rahmens des Kinderwagens oder ein reines Kraftübertragungselement sein und dient vornehmlich dazu, Kräfte von der Achsanordnung auf den Rahmen zu übertragen. Beispielsweise kann das Fahrgestell als ein Horn ausgebildet sein. Das Zwischenelement der Achsanordnung ist krafttechnisch zwischen der Achse und dem Fahrgestell angeordnet und dient dazu, Kräfte und/oder Momente zwischen der Achse und dem Fahrgestell zu übertragen. Daher ist das Zwischenelement vorteilhafterweise aus Metall oder Kunststoff ausgebildet. Besonders bevorzugt ist das Zwischenelement aus Magnesium ausgebildet, um ein geringes Gewicht zu erzielen. Das Zwischenelement ist dabei an der Achse angeordnet oder an dieser festgelegt. In anderen Worten ist die Achse mit dem Zwischenelement verbunden. Diese Verbindung kann beispielsweise durch eine Klemmverbindung, insbesondere unter der Nutzung von Schrauben, erreicht werden. Alternativ oder zusätzlich bevorzugt kann diese Klemmverbindung auch durch die Verwendung eines U-Bügels erreicht werden. Bevorzugt kann das Zwischenelement auch irreversibel an der Achse befestigt sein, z.B. durch Schweißen, kleben oder Löten. Eine reversible Anordnung oder Befestigung an der Achse ist jedoch vorteilhaft, weil hierdurch in einfacher Weise Verschleißteile ausgetauscht werden können. Die Festlegung und/oder die Anordnung erfolgt dabei vorteilhafterweise derart, dass Kräfte und Momente in alle Raumrichtung sicher zwischen der Achse und dem Zwischenelement übertragen werden können, insbesondere ohne eine relative Bewegung zwischen den Elementen. Die Kraft- und/oder Momentenübertragung zwischen dem Zwischenelement und dem Fahrgestell ist dabei derart ausgestaltet, dass ein Moment um die Längsrichtung und/oder eine Kraft quer zu der Längsrichtung, insbesondere in eine Querrichtung, zwischen dem Zwischenelement und dem Fahrgestell, insbesondere form- und/oder kraftschlüssig, übertragbar ist, wobei das Zwischenelement in Richtung der Längsrichtung verschieblich zu dem Fahrgestell ist. In anderen Worten ist das Fahrgestell relativ zum Zwischenelement derart angeordnet, dass zwar eine Kraft quer zur Längsrichtung, insbesondere formschlüssig, und/oder ein Moment um die Längsrichtung, insbesondere formschlüssig, übertragen werden kann, in Richtung der Längsrichtung sind das Fahrgestell und das Zwischenelement jedoch spielbehaftet zu einander ausgebildet bzw. gelagert. Hierdurch kann ein gewisser Ausgleich von Fertigungstoleranzen erreicht werden, sodass eine leicht herzustellende und kostengünstige Achsanordnung resultiert.

Zweckmäßigerweise erstreckt sich das Zwischenelement in eine Höhenrichtung, wobei die Höhenrichtung zweckmäßigerweise im Wesentlichen senkrecht zu der Längsrichtung steht, wobei das Zwischenelement vorteilhafterweise zumindest bereichsweise zylindrisch um die Höhenrichtung ausgebildet ist. Die Höhenrichtung ist insbesondere diejenige Richtung, in welche sich die Länge des Zwischenelements bemisst. Beispielsweise kann in einem eingebauten Zustand die Höhenrichtung parallel zu dem Vektor der Erdbeschleunigung sein. Die Höhenrichtung ist dabei im Wesentlichen senkrecht zu der Längsrichtung, wobei im Wesentlichen senkrecht bedeutet, dass ein Winkel von 85° bis 95°, bevorzugt von 87° bis 93° zwischen den Richtungen gebildet sein darf. Durch die zumindest bereichsweise zylindrische Ausbildung des Zwischenelements kann dies einfach gefertigt werden, sodass Kosten gespart werden können.

Vorteilhafterweise ist die Achsanordnung derart ausgestaltet, dass das Zwischenelement in Höhenrichtung verschieblich zu dem Fahrgestell angeordnet und/oder gelagert ist. Hierdurch kann ein gewisses Spiel bzw. eine gewisse Einfederbarkeit in die Achsanordnung eingeführt werden, was insbesondere den Komfort des Kinderwagens steigert, in dem die Achsanordnung eingebaut werden soll.

Zweckmäßigerweise verfügt die Achsanordnung über eine Feder, insbesondere zwischen dem Zwischenelement und dem Fahrgestell. Durch die Feder wird eine kompakte federnde Abstützung in Höhenrichtung zwischen dem Fahrgestell und dem Zwischenelement erreicht, sodass eine bauraumsparende und dennoch komfortsteigernde Achsanordnung erreicht wird. Vorteilhafterweise ist die Feder dabei derart angeordnet, dass die Feder Energie aufnimmt oder abgibt, wenn das Zwischenelement in Höhenrichtung relativ zum Fahrgestell verlagert wird. In anderen Worten kann dies bedeuten, dass die Feder derart angeordnet ist, dass diese eine Relativbewegung des Zwischenelements relativ zum Fahrgestell abfedert.

Bevorzugt umgibt das Fahrgestell das Zwischenelement zumindest bereichsweise, vorteilhafterweise vollständig. Durch das Umgeben des Zwischenelements durch das Fahrgestell wird erreicht, dass kein oder nur sehr schwer ein Eingreifen in die spielbehaftete Lagerungen erreicht werden kann bzw. möglich ist. Insbesondere ist dabei der Zwischenraum - zwischen Fahrgestell und Zwischenelement - derjenige Raum, in welchem sich die Feder befindet. In anderen Worten kann die Feder derart angeordnet sein, dass diese vom Zwischenelement umgeben ist. Hierdurch kann ein Eingreifen in die Feder verhindert oder zumindest minimiert werden, sodass die Betriebssicherheit der Achsanordnung gesteigert werden kann.

Zweckmäßigerweise stützt sich das Fahrgestell mittelbar und/oder unmittelbar derart am Zwischenelement ab, dass eine Verlagerung des Fahrgestells in die Querrichtung relativ zu dem Zwischenelement formschlüssig verhindert ist. Hierdurch kann eine besonders kompakte und sichere Achsanordnung erreicht werden. Die Querrichtung kann dabei insbesondere diejenige Richtung sein, in welche der Kinderwagen, in dem die Achsanordnung eingebaut ist, geschoben und/oder bewegt wird. In anderen Worten kann die Querrichtung daher beispielsweise mit der Geradeausfahrrichtung des Kinderwagens parallel sein. Diese Art der Abstützung kann insbesondere durch einen direkten oder indirekten Kontakt von Flächen des Fahrgestells mit Flächen des Zwischenelements erreicht werden.

Vorteilhafterweise weist das Zwischenelement eine erste Anlagefläche auf, wobei das Fahrgestell eine erste Komplementärfläche aufweist, wobei die erste Anlagefläche und die erste Komplementärfläche komplementär zueinander ausgebildet sind, und wobei die erste Anlagefläche und die erste Komplementärfläche in einem eingebauten Zustand mittel- und/oder unmittelbar kontaktierend sind. Hierdurch kann eine besonders einfach herzustellende und kostengünstige spielende bzw. spielbehaftete Abstützung des Zwischenelements relativ zum Fahrgestell erreicht werden. Komplementär bedeutet dabei in diesem Zusammenhang, dass die erste Anlagefläche und die korrespondierende bzw. kontaktierende erste Komplementärfläche geometrisch gleichförmig ausgebildet sind. Daher ist z.B. die erste Anlagefläche komplementär zu der ersten Komplementärfläche ausgebildet, wenn die erste Komplementärfläche und die erste Anlagefläche beide im Wesentlichen kreisförmig um dieselbe Achse oder eben, insbesondere planparallel, oder zylindrisch um dieselbe Achse ausgebildet sind. Eine komplementäre Ausgestaltung wird dabei jedoch grundlegend nicht zerstört, wenn eine geometrische gleichförmige Ausgestaltung vorliegt, die beispielsweise durch kleine Nuten, insbesondere zur Schmierung, durchbrochen wird.

Zweckmäßigerweise sind die erste Anlagefläche und die erste Komplementärfläche eben ausgebildet, insbesondere weisen die erste Anlagefläche und die erste Komplementärfläche dabei eine Normale in die Querrichtung auf. Hierdurch resultieren ein besonders kostengünstiges Zwischenelement und Fahrgestell, sodass Kosten gespart werden können. Darüber hinaus kann hierdurch auch eine besonders große Kraft in Richtung der Querrichtung sicher übertragen werden. Vorteilhafterweise weisen die erste Anlagefläche und die erste Komplementärfläche dabei mindestens eine ebene Fläche von 750 mm^2, bevorzugt von mindestens 1000 mm^2 auf, um eine ausreichende Festigkeit zu bieten.

Vorteilhafterweise sind die Normalen der ebenen ersten Anlagefläche und der ebenen ersten Komplementärfläche parallel zueinander orientiert. Hierdurch können hohe lokale Flächenpressungen vermieden werden.
Bevorzugt weist die erste Anlagefläche eine größere Erstreckung in Längsrichtung auf als die erste Komplementärfläche. Hierdurch kann eine besonders einfache und sichere Abstützung des Zwischenelementes relativ zum Fahrgestell erreicht werden, die besonders kostengünstig und einfach herzustellen ist, wobei gleichzeitig ein hohes Maß an Beweglichkeit, insbesondere in Längsrichtung, erreichbar ist.

Vorteilhafterweise weist die erste Anlagefläche und/oder die erste Komplementärfläche eine reibungsreduzierende Oberflächenstruktur und/oder eine reibungsreduzierende Beschichtung auf. Hierdurch kann eine Reduktion der Verschließerscheinungen erreicht werden, wodurch die Standfestigkeit der Achsanordnung erhöht werden kann. Eine reibungsreduzierende Oberflächenstruktur kann beispielsweise durch eine Reduktion der Oberflächenrauhigkeit erreicht werden. Alternativ oder zusätzlich bevorzugt kann die reibungsreduzierende Oberflächenstruktur auch durch Anodisieren oder Eloxieren erreicht werden. Eine reibungsreduzierende Beschichtung kann z.B. durch eine Beschichtung mit Aramid erreicht werden.

Zusätzlich oder alternativ bevorzugt kann zwischen der ersten Anlagefläche und der ersten Komplementärfläche ein Kontaktelement eingebracht sein. Dieses Kontaktelement dient dazu, die auftretende Reibung zu reduzieren und/oder dient dazu, eine Dämpfungswirkung zu erreichen. Vorteilhafterweise ist dieses Kontaktelement dabei aus Kunststoff, insbesondere aus einem hochmolekularen thermoplastischen Kunststoff, wie z.B. Polyoxymethylen und/oder POM-Kunststoff. Hierdurch kann eine besonders verschleißarme Reibungsreduktion erreicht werden. Darüber hinaus kann mit diesem Material auch eine kostengünstige Herstellung durch Spritzgießen erreicht werden. Vorteilhafterweise weist das Material des Kontaktelements eine Zugfestigkeit von mindestens 2900 MPa auf. Hierdurch kann ein besonders mechanisch belastbares Kontaktelement erreicht werden. Besonders bevorzugt liegt die Fließspannung des Materials, aus dem das Kontaktelement besteht, bei 71 MPa. Das Kontaktelement weist insbesondere eine erste Kontaktfläche zum Kontakt mit der ersten Anlagefläche und eine zweite Kontaktfläche zum Kontakt mit der ersten Komplementärfläche auf. Die Materialstärke des Kontaktelements liegt vorteilhafterweise in einem Bereich von 0,2 mm bis 3 mm. Um eine hohe Festigkeit zu erreichen und um eine kostengünstige Herstellung herbeiführen zu können, sind die ersten Kontaktfläche und die zweite Kontaktfläche insbesondere parallel zueinander ausgebildet.

Zweckmäßigerweise ist das Zwischenelement zumindest teilweise aus Aluminium ausgebildet. Hierdurch resultiert ein besonders korrosionsarmes und leichtes Zwischenelement. Alternativ oder zusätzlich bevorzugt kann das Zwischenelement zumindest teilweise auch aus Kunststoff ausgebildet sein.

Bevorzugt ist das Fahrgestell zumindest teilweise aus Magnesium ausgebildet. Hierdurch resultiert ein besonders leichtes und mechanisch stabiles Fahrgestell.

Vorteilhafterweise weist das Zwischenelement eine zweite Anlagefläche auf, wobei das Fahrgestell eine zweite Komplementärfläche aufweist, wobei die zweite Anlagefläche und die zweite Komplementärfläche komplementär zueinander ausgebildet sind, und wobei die zweite Anlagefläche und die zweite Komplementärfläche in einem eingebauten Zustand mittel- und/oder unmittelbar kontaktierend sind, und wobei die erste Anlagefläche auf der der zweiten Anlagefläche gegenüberliegenden Seite des Zwischenelement, insbesondere in die Querrichtung gesehen, angeordnet ist. Hierdurch kann eine besonders stabile Achsanordnung mit schwimmender Lagerung in Längsrichtung erreicht werden, da mehrere Fläche für eine formschlüssige Abstützung vorgesehen sind. Die zweite Anlagefläche und die zweite Komplementärfläche können dabei ebenfalls oder alternativ die obig und im nachfolgenden beschriebenen Merkmale und Eigenschaften aufweisen. In anderen Worten können die zweite Anlagefläche und die zweite Komplementärfläche dabei in gleicher Weise ausgestaltet sein wie die erste Anlagefläche bzw. die erste Komplementärfläche. Daher kann die zweite Anlagefläche bzw. die zweite Komplementärfläche alle Merkmale aufweisen, wie sie obig für die erste Anlagefläche bzw. die erste Komplementärfläche aufgeführt sind, beispielsweise können diese Flächen eben sein und insbesondere eine Normale in Querrichtung aufweisen.

Zweckmäßigerweise liegt die Verschieblichkeit des Zwischenelements in Richtung der Längsrichtung relativ zum Fahrgestell in einem Bereich von 0,5 mm bis 5 mm, bevorzugt zwischen 1 mm und 3 mm, besonders bevorzugt zwischen 1 mm und 2 mm. Vorteilhafterweise wird diese relative Beweglichkeit durch formschlüssige Anschläge in Richtung der Längsrichtung begrenzt. In anderen Worten kann die erfindungsgemäße Verlagerbarkeit des Zwischenelements in Richtung der Längsrichtung formschlüssig begrenzt sein. Durch diese begrenzte Verschieblichkeit können die Fertigungstoleranzen ausgeglichen werden und dennoch wird keine große Relativbewegung zugelassen, welche sich bei einem Kinderwagen und dessen Verwendung negativ auswirken kann, insbesondere in Hinblick auf eine sichere Seitenführung des Kinderwagens.

Vorteilhafterweise ist die Verschieblichkeit des Zwischenelements in Richtung der Längsrichtung relativ zum Fahrgestell formschlüssig begrenzt. Hierdurch kann eine besonders verschleißarme und sichere Begrenzung der Verschieblichkeit erreicht werden.

Zweckmäßigerweise sind die Achse und das Klemmelement und/oder das Zwischenelement derart ausgebildet, dass eine Verdrehung der Achse relativ zum Klemmelement und/oder zum Zwischenelement formschlüssig verhindert ist. Vorteilhafterweise weist die Achse hierzu einen Vor- oder Rücksprung oder einen Durchbruch auf und das Klemmelement und/oder das Zwischenelement einen entsprechenden Rück- oder Vorsprung. Hierdurch kann eine besonders sichere Drehmomentübertragung zwischen der Achse und dem Klemmelement und/oder dem Zwischenelement erreicht werden.

Weiter Vorteile und Merkmale der vorliegenden Erfindung ergeben sich aus der nachfolgenden Beschreibung mit Bezug zu den Figuren. Einzelne Merkmale der dargestellten Ausführungsformen können dabei auch in anderen Ausführungsformen eingesetzt werden, sofern dies nicht ausdrücklich ausgeschlossen wurde.Es zeigen:
- Figur 1: eine Explosionsansicht einer erfindungsgemäßen Achsanordnung;
- Figur 2: eine Detailansicht einer erfindungsgemäßen Achsanordnung;
- Figur 3: eine Detailansicht eines Fahrgestells;
- Figur 4: eine Außenansicht einer erfindungsgemäßen Achsanordnung;
- Figur 5: eine Schnittansicht durch eine erfindungsgemäße Achsanordnung;
- Figur 6: eine weitere Schnittansicht durch eine erfindungsgemäße Achsanordnung und
- Figur 7: eine weitere Explosionsansicht einer erfindungsgemäßen Achsanordnung.

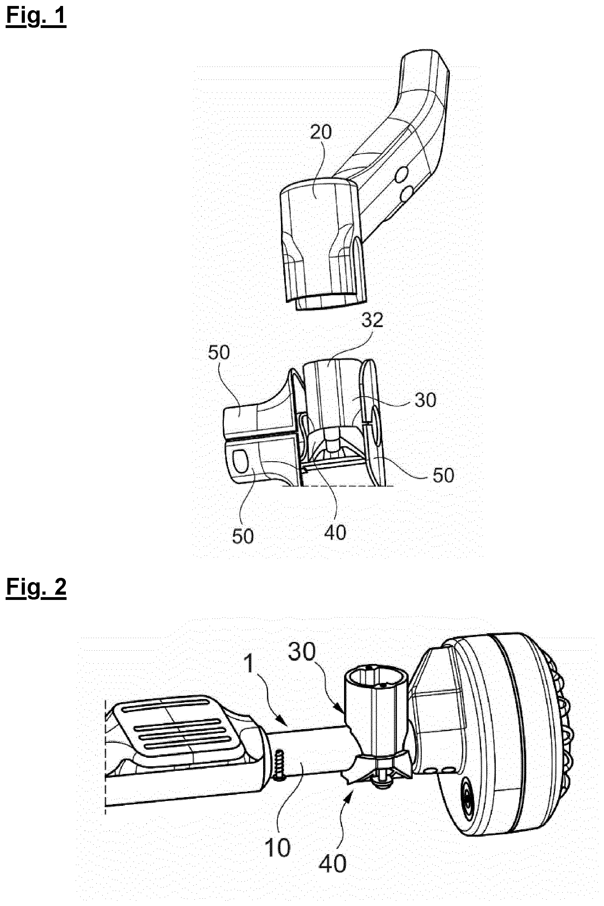

In der **Figur 1** ist eine Explosionsansicht einer erfindungsgemäßen Achsanordnung 1 gezeigt. Die Achsanordnung 1 umfasst unter anderem ein Fahrgestell 20, eine Achse 10 (in Figur 1 nicht dargestellt), eine Vielzahl von Abdeckelementen 50, insbesondere aus Kunststoff, und ein Klemmelement 40. Das Fahrgestell 20 ist dabei in der Figur 1 in Höhenrichtung H versetzt zu seiner endgültigen Einbauposition dargestellt, um einen Blick auf das Zwischenelement 30 und dessen erste Anlagefläche 32 zu ermöglichen. Das Klemmelement 40 dient dabei dazu, über Schrauben oder andere Klemmmittel das Zwischenelement 30 an der Achse 10 festzulegen.

In der **Figur 2** ist eine Detailansicht einer Achsanordnung 1 gezeigt, wobei aus Übersichtlichkeitsgründen das Fahrgestell 30 nicht dargestellt ist. Wie in Figur 2 ersichtlich, ist das Zwischenelement 30 durch das Klemmelement 40 an der Achse 10 angeordnet bzw. festgelegt.

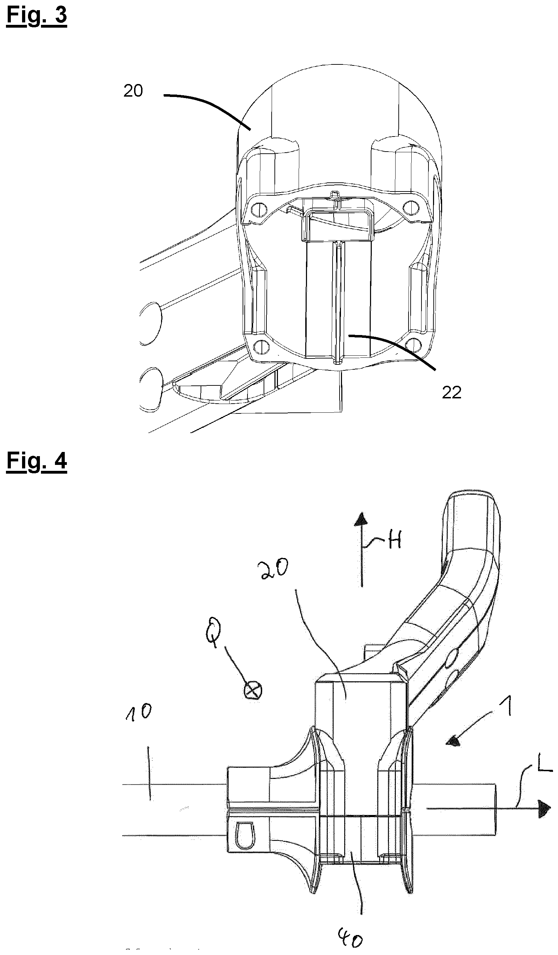

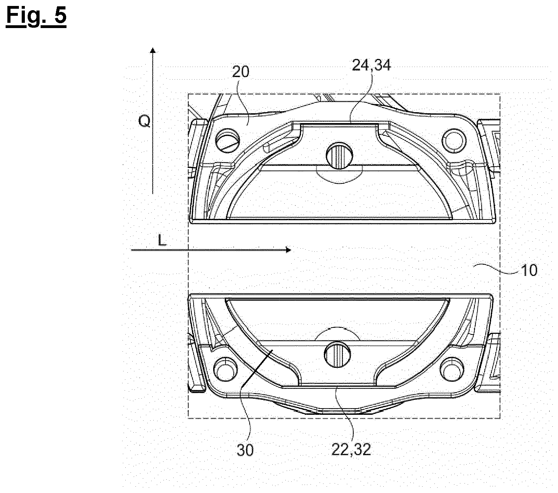

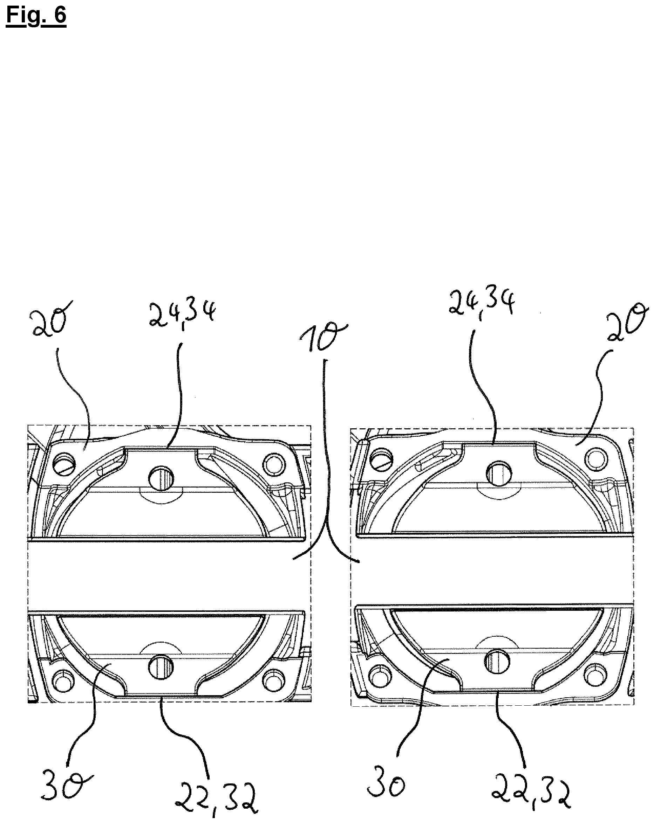

In der **Figur 3** ist eine Detailansicht eines Fahrgestells 20 gezeigt, und dessen erste Komplementärfläche 22, welche in einem eingebauten Zustand mittel- oder unmittelbar die erste Anlagefläche 32 des Zwischenelements 30 kontaktiert, wie es beispielhaft in den Figuren 5 und 6 in beispielshaften Ausführungsformen dargestellt ist.

Die erste Komplementärfläche 22 weist dabei eine Zentralnut auf, welche unter anderem dazu dienen kann, ein Schmiermittel aufzunehmen bzw. als ein Schmiermittelspeicher zu dienen. Alternativ kann die Komplementärfläche 22 jedoch auch ohne eine derartige Zentralnut ausgebildet sein.

Das Fahrgestell 20 weist - wie in der Figur 3 ersichtlich - einen Innenraum auf, welcher das Zwischenelement 30 teilweise aufnehmen kann, sodass das Zwischenelement 30 zumindest teilweise vom Fahrgestell 20 umgeben bzw. umschlossen ist.

In der **Figur 4** ist eine Außenansicht einer erfindungsgemäßen Achsanordnung 1 in einem eingebauten Zustand gezeigt. Das Zwischenelement 30 ist dabei nicht erkennbar, denn dieses ist von dem Fahrgestell 20 umschlossen. Die Achse 10 der Achsanordnung 1 erstreckt sich dabei in die Längsrichtung L und das nicht zu erkennende Zwischenelement 30 in die dargestellte Höhenrichtung H. Senkrecht zu der Höhenrichtung H und der Längsrichtung L steht die Querrichtung Q.

In der **Figur 5** ist eine Schnittansicht durch die Achse 10 und die Achsanordnung 1 gezeigt, wobei die Schnittebene durch die Querrichtung Q und die Längsrichtung L aufgespannt ist. Daher zeigt die Höhenrichtung H in die Zeichenebene. In der Figur 5 ist das Fahrgestell 20 und das Zwischenelement 30 in einer mittleren Position befindlich. Die erste und die zweite Komplementärfläche 22, 24 des Fahrgestells 20 kontaktiert dabei jeweils entsprechend die erste bzw. die zweite Anlagefläche 32, 34 des Zwischenelements 30, sodass eine Verlagerung in positive oder negative Querrichtung Q formschlüssig verhindert - durch diese Kontakte - ist. In Längsrichtung L ist jedoch durch die ebene und komplementäre Ausgestaltung der ersten bzw. der zweiten Komplementärfläche 22, 24 zu der ersten bzw. zu der zweiten Anlagefläche 32, 34 eine Verlagerung möglich.

In der **Figur 6** ist dabei in der linken Ansicht eine extremste Position des Zwischenelements 30 relativ zum Fahrgestell 20 in Richtung der Längsrichtung L gezeigt und auf der rechten Abbildung die andere gegenüberliegende extrem Position in Richtung der Längsrichtung L. Hierbei wird durch die Ausgestaltung des Zwischenelements 30 und des Fahrgestells 20 jeweils ein formschlüssiger Anschlag ausgebildet, sodass die "schwimmende" Lagerung (verschiebliche Anordnung) in Längsrichtung L formschlüssig begrenzt ist.

Wie der Figur 6 zu entnehmen ist, sind die erste Anlagefläche 32 und die erste Komplementärfläche 22 komplementär zueinander ausgebildet. Darüber hinaus ist auch die zweite Anlagefläche 34 komplementär zu der zweiten Komplementärfläche 24 ausgebildet.

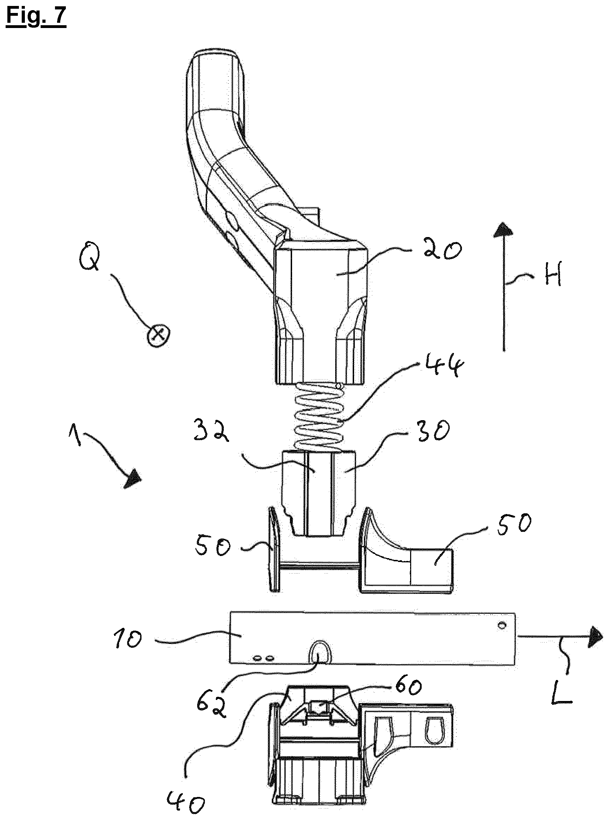

In der **Figur 7** ist eine weitere Ansicht einer erfindungsgemäßen Achsanordnung 1 gezeigt. Die Achsanordnung 1 verfügt über eine Achse 10, ein Fahrgestell 20, ein Zwischenelement 30, ein Klemmelement 40, eine Feder 44 sowie über Abdeckelemente 50.

Das Zwischenelement 30 weist eine erste Anlagefläche 32 auf, welche dazu dient, mittel- oder unmittelbar mit einer komplementär ausgebildeten ersten Komplementärfläche 22 des Fahrgestells 20 zu kontaktieren.

Die Feder 44 ist derart angeordnet, dass diese eine Relativbewegung des Zwischenelements 30 bzw. der Achse 10 und des Klemmteils 40 zu dem Fahrgestell 20 federt. Die Feder 44 ist dabei derart positioniert, dass diese - in einer eingebauten Position - zumindest teilweise innerhalb des Fahrgestells 20 angeordnet ist.

Um eine Drehung der Achse 10 um die Längsrichtung L relativ zu dem Klemmteil 50 zu verhindern, weist die Achse 10 einen Durchbruch 62 auf und das Klemmteil 50 einen Vorsprung 60, welcher sich in einer eingebauten Position zumindest teilweise in den Durchbruch 62 der Achse 10 erstreckt.

### Bezugszeichenliste:

- 1: - Achsanordnung
- 10: - Achse
- 20: - Fahrgestell
- 22: - erste Komplementärfläche
- 24: - zweite Komplementärfläche
- 30: - Zwischenelement
- 32: - erste Anlagefläche
- 34: - zweite Anlagefläche
- 40: - Klemmelement
- 44: - Feder
- 50: - Abdeckelement
- 60: - Vorsprung
- 62: - Durchbruch
- H: - Höhenrichtung
- L: - Längsrichtung
- Q: - Querrichtung

## Patentansprüche

1. Achsanordnung (1) für einen Kinderwagen, umfassend
eine Achse (10), ein Fahrgestell (20) und ein Zwischenelement (30),
wobei die Achse (10) sich in eine Längsrichtung (L) erstreckt,
wobei das Zwischenelement (30) an der Achse (10) angeordnet und/oder festgelegt ist, insbesondere reversibel,
wobei das Fahrgestell (20) sich mittelbar und/oder unmittelbar derart am Zwischenelement (30) abstützt,
dass ein Moment um die Längsrichtung (L) und/oder eine Kraft quer zu der Längsrichtung (L), insbesondere in eine Querrichtung (Q), zwischen dem Zwischenelement (30) und dem Fahrgestell (20) übertragbar ist,
wobei das Zwischenelement (30) in Richtung der Längsrichtung (L) verschieblich zu dem Fahrgestell (20) ist.

2. Achsanordnung (1) gemäß Anspruch 1,
wobei das Zwischenelement (30) sich in eine Höhenrichtung (H) erstreckt, wobei die Höhenrichtung (H) im Wesentlichen senkrecht zu der Längsrichtung (L) steht,
wobei das Zwischenelement (30) vorteilhafterweise zumindest bereichsweise zylindrisch um die Höhenrichtung (H) ausgebildet ist.

3. Achsanordnung (1) gemäß Anspruch 1 oder 2,
wobei die Achsanordnung derart ausgestaltet, dass das Zwischenelement (30) in Höhenrichtung (H) verschieblich zu dem Fahrgestell (20) angeordnet und/oder gelagert ist.

4. Achsanordnung (1) gemäß einem der Ansprüche 1 bis 3,
wobei das Fahrgestell (20) das Zwischenelement (30), zumindest bereichsweise, umgibt.

5. Achsanordnung (1) gemäß einem der vorhergehenden Ansprüche, wobei das Fahrgestell (20) sich mittelbar und/oder unmittelbar derart am Zwischenelement (30) abstützt,
dass eine Verlagerung des Fahrgestells (20) in die Querrichtung (Q) relativ zu dem Zwischenelement formschlüssig verhindert ist.

6. Achsanordnung (1) gemäß einem der vorhergehenden Ansprüche,
wobei das Zwischenelement (30) eine erste Anlagefläche (32) aufweist, wobei das Fahrgestell (20) eine erste Komplementärfläche (22) aufweist, wobei die erste Anlagefläche (32) und die erste Komplementärfläche (22) komplementär zueinander ausgebildet sind, und
wobei die erste Anlagefläche (32) und die erste Komplementärfläche (22) in einem eingebauten Zustand kontaktierend sind.

7. Achsanordnung (1) gemäß Anspruch 6,
wobei die erste Anlagefläche (32) und die erste Komplementärfläche (22) eben ausgebildet sind,
insbesondere weisen die erste Anlagefläche (32) und die erste Komplementärfläche (22) dabei eine Normale in die Querrichtung (Q) auf.

8. Achsanordnung (1) gemäß einem der Ansprüche 6 oder 7,
wobei die erste Anlagefläche (32) eine größere Erstreckung in Längsrichtung (L) aufweist als die erste Komplementärfläche (22).

9. Achsanordnung (1) gemäß einem der Ansprüche 6 bis 8,
wobei die erste Anlagefläche (32) eine reibungsreduzierende Oberflächenstruktur und/oder Beschichtung aufweist.

10. Achsanordnung (1) gemäß einem der vorhergehenden Ansprüche, wobei das Zwischenelement (30) zumindest teilweise aus Aluminium ausgebildet ist.

11. Achsanordnung (1) gemäß einem der vorhergehenden Ansprüche, wobei das Fahrgestell zumindest teilweise aus Magnesium ausgebildet ist.

12. Achsanordnung (1) gemäß einem der Ansprüche 6 bis 11,
wobei das Zwischenelement (30) eine zweite Anlagefläche (34) aufweist, wobei das Fahrgestell (20) eine zweite Komplementärfläche (24) aufweist, wobei die zweite Anlagefläche (34) und die zweite Komplementärfläche (24) komplementär zueinander ausgebildet sind, und
wobei die zweite Anlagefläche (34) und die zweite Komplementärfläche (24) in einem eingebauten Zustand kontaktierend sind, und
wobei die erste Anlagefläche (32) auf der der zweiten Anlagefläche (34) gegenüberliegenden Seite, insbesondere in die Querrichtung (Q) gesehen, angeordnet ist.

13. Achsanordnung (1) gemäß einem der vorhergehenden Ansprüche, wobei die Verschieblichkeit des Zwischenelements (30) in Richtung der Längsrichtung (L) relativ zum Fahrgestell (20) in einem Bereich von 0,5 mm bis 5 mm, bevorzugt zwischen 1 mm und 2 mm, liegt.

14. Achsanordnung (1) gemäß einem der vorhergehenden Ansprüche, wobei die Verschieblichkeit des Zwischenelements (30) in Richtung der Längsrichtung (L) relativ zum Fahrgestell (20) formschlüssig begrenzt ist.

15. Kinderwagen mit einer Achsanordnung gemäß einem der Ansprüche 1 bis 14.
